# EUROPÄISCHE PATENTSCHRIFT

(11) **EP 3 945 822 B1**
(45) Veröffentlichungstag und Bekanntmachung des Hinweises auf die Patenterteilung: **05.03.2025**
(21) Anmeldenummer: 20713539.3
(22) Anmeldetag: 17.03.2020
(51) Int. Cl.: A01N 43/78, B64D 11/06, B60N 2/90, A01N 59/16, A01N 43/90, D06M 11/74, D06M 16/00, D06N 3/00, D06M 13/352

(54) **KISSEN FÜR EINEN FLUGZEUGSITZ MIT ANTIMIKROBIELLER WIRKUNG**
CUSHION FOR AN AIRCRAFT SEAT WITH ANTIMICROBIAL EFFECT
COUSSIN POUR SIÈGE D'AVION À EFFET ANTIMICROBIEN

(30) Priorität: 25.03.2019 DE 102019204044
(43) Veröffentlichungstag der Anmeldung: 09.02.2022
(73) Patentinhaber: NEVEON Austria GmbH, 4550 Kremsmünster (AT)
(72) Erfinder: HESSENBERGER, Norbert, 4694 Ohlsdorf (AT)
(74) Vertreter: Maikowski & Ninnemann Patentanwälte Partnerschaft mbB
(86) Internationale Anmeldenummer: PCT/EP2020/057240
(87) Internationale Veröffentlichungsnummer: WO 2020/193276

(56) Entgegenhaltungen:
- WO-A1-01/00720
- WO-A1-2015/194292
- WO-A1-2018/177808
- NL-C2- 1 033 695
- US-A1- 2002 182 967
- US-A1- 2012 171 269
- V.S. DAGOSTIN ET AL: "Bactericidal polyurethane foam mattresses: Microbiological characterization and effectiveness", MATERIALS SCIENCE AND ENGINEERING C., vol. 30, no. 5, 1 June 2010 (2010-06-01), CH, pages 705 - 708, XP055693173, ISSN: 0928-4931, DOI: 10.1016/j.msec.2010.03.004
- .: "Ultra-Fresh DW-30", 23 January 2017 (2017-01-23), Toronto, Canada, pages 1 - 2, XP055693519, Retrieved from the Internet <URL:https://ergocontrol.es/images/pdfs/ultra-fresh-dw-30-pis.pdf> [retrieved on 20200511]

## Beschreibung

Die vorliegende Erfindung betrifft ein Kissen für einen Flugzeugsitz mit antimikrobiell wirksamen Substanzen und einen Flugzeugsitz mit solch einem Kissen.

Flugzeughersteller und deren Zulieferer sowie Fluggesellschaften sind daran interessiert Sicherheit, Komfort und Gesundheit der Passagiere konstant zu verbessern. Eine entscheidende Bedeutung kommt dabei den Flugzeugsitzen und den damit verbundenen Sitzkissen zu.

Die herkömmlich verwendeten Kissen, wie. z.B. Sitzkissen bestehen im Wesentlichen aus Schaumstoffen. In den meisten Fällen stehen die Schaumstoffe in Kontakt mit dem Körper, meist nur durch eine oder mehrere textile Zwischenschichten getrennt. Die meisten Schaumstoffe bestehen aus synthetischen Polymeren wie Polyurethan, Polystyrol, Synthesekautschuk, die bis zu einem bestimmten Umfang Feuchtigkeit wie zum Beispiel Körperschweiß aufnehmen.

Dies hat zur Folge dass sich mit der Zeit in den Schaumstoffen ein für das Wachstum von Bakterien und anderen unerwünschten Mikroben, wie zum Beispiel Milben vorteilhaftes Klima bildet. Entsprechend kann es zu einem Bakterienwachstum in den Kissen kommen, wobei es schwierig ist, diese zu beseitigen.

Eine Möglichkeit dem entgegenzuwirken besteht in Verwendung von Bezügen mit antimikrobiellen Eigenschaften. So wird zum Beispiel in der US 2013/0341979 A1 eine Kissenvorrichtung zur Befestigung an einer Armlehne eines Flugzeugsitzes beschrieben. Das Kissen weist einen Überzug aus antimikrobiellen Polyester oder Nylon auf.

Den Textilbezügen können zudem antimikrobiell wirksame Additive zugefügt werden. NL 1033695 beschreibt ein Kissen für einen Flugzeugsitz aus einem Polstermaterial aus einem geschäumten Polymer (zum Beispiel Polyurethanschaum), der antimikrobiell wirksame Substanzen wie Silber-Zeolith oder DW-30 enthalten kann.

Als antimikrobiell wirksame Additive wurden in der Vergangenheit auch bevorzugt Silber und/oder Zink enthaltene Substanzen verwendet. In der US 2012/0171269 A1 wird eine Abdeckung für verschiedene Sitze offenbart, die Silber oder Kupfer in Form von Nanopartikeln enthalten.

Es ist auch bekannt, Silbersalze direkt in Schaumstoffe während des Herstellungsprozesses zuzudosieren und somit die Silbersalze in die Schaumstoffmatrix einzubauen und damit antibakterielle oder anti-fungizide Eigenschaften des Schaumstoffs zu erzeugen. Der Einbau von Silber in den Schaumstoff kann in Form von Ionen oder Nanopartikeln erfolgen. Es ist auch bekannt Silber enthaltene Fasern in ein Kissenmaterial einzubauen (WO 2015/194292 A1).

Allerdings verlieren die antimikrobiellen Substanzen wie Silber mit der Zeit ihre Wirksamkeit. Auch die Entsorgung derartiger chemisch belasteter Schaumstoffe kann ein Problem darstellen.

Der vorliegenden Erfindung liegt nunmehr die Aufgabe zugrunde, ein Kissen für einen Flugzeugsitz bereitzustellen, der eine gegenüber den bekannten Ausführungen eine verbesserte antimikrobielle Wirksamkeit aufweist und somit zur verbesserte Hygiene in den Flugzeugen und somit einem verbesserten Wohlbefinden der Passagier beiträgt. Das Kissen muss zudem den in Flugzeugen notwendigen Sicherheitsvorkehrungen, insbesondere in Bezug auf den Brandschutz, entsprechen.

Diese Aufgabe wird erfindungsgemäß mit einem Kissen für einen Flugzeugsitz mit den Merkmalen des Anspruchs 1 gelöst.

Entsprechend wird ein Kissen, wie z.B. Sitzkissen, Rückenkissen, Kopfkissen, Beinauflagen, Armlehnen als auch Kissenkombinationen für Liegeanwendungen, für einen Flugzeugsitz bereitgestellt, wobei das Kissen umfasst:
- mindestens ein antimikrobiell wirksames Polster aus mindestens einem Kunststoff, wobei in dem Polster mindestens zwei antimikrobiell wirksame Substanzen enthalten sind, wobei die antimikrobiell wirksamen Substanzen kein Silber oder Silber-Ionen enthalten, und
   - mindestens ein das mindestens eine Polster bedeckendes antimikrobiell wirksames Flammenschutzgewebe, wobei das Flammenschutzgewebe mindestens eine Abrasionsschicht und mindestens eine Barriereschicht umfasst, und
   - mindestens einen antimikrobiell wirksamen Überzug.

Es wird somit ein Kissen, wie z.B. ein Sitzkissen mit antimikrobiellen Eigenschaften bereitgestellt. Die antimikrobiellen Substanzen werden direkt in das Polster eingearbeitet und sind somit integraler Bestandteil des Polsters.

Das vorliegende Kissen weist nicht nur eine verbesserte antibakterielle and antifungizide Wirksamkeit auf, sondern ist ebenfalls in der Lage Feuchtigkeit zu absorbieren, zu speichern und schnell wieder abzugeben. Aufgrund des verwendeten Kunststoffs als Schaumstoff weist das vorliegende Kissen ebenfalls eine hohe Luftdurchlässigkeit und Elastizität auf. Darüber hinaus entspricht das vorliegende Kissen den Anforderungen an Gesundheit (keine für die Gesundheit des Menschen schädliche Substanzen), Stabilität und Brandsicherheit.

Erfindungsgemäß ist mindestens eine antimikrobiell wirksame Substanz Thiabendazol (TBZ), also 2-(4-Thiazolyl)-1H-benzimidazol.

Das Thiabendazol ist in dem vorliegenden Kissen in einer Menge zwischer 5 und 25 Gew%, bevorzugt zwischen 10 und 20 Gew%, insbesondere bevorzugt zwischen 12 und 18 Gew%, ganz besonders bevorzugt 15 Gew% in dem Polster enthalten. Erfindungsgemäß ist eine andere antimikrobiell wirksame Substanz mindestens ein Pyrithion. Pyrithion ist ein natürliches Pflanzenprodukt der asiatischen Zwiebel (*Allium stipitatum*). Das Dipyrithiondisulfid (2,2'-disulfanediylbis(pyridine)-1,1'-dioxide) wurde in dieser Pflanze ebenfalls gefunden. Natriumpyrithion wird als Antimykotikum verwendet. Dipytithion ist als ein Bakterizid und Funfizuid wirksam.

Vorliegend wird bevorzugt Zink-Pyrithion verwendet. Hierbei fungiert das Pyrithin-Anion als einzähniger oder zweizähniger Ligand und bildet einen 1:2 Komplex mit einem Zink(II) Zentrum Der Komplex wird auch als Bis(1-hydroxy-2(1H)-pyridinethionato-O,S) Zn bezeichnet.

Das mindestens eine Pyrithion in einer Menge zwischen 5 und 25 Gew%, bevorzugt zwischen 10 und 20 Gew%, insbesondere bevorzugt zwischen 12 und 18 Gew%, ganz besonders bevorzugt 15 Gew% in dem Polster enthalten.

Erfindungsgemäß wird eine Kombination von mindestens Thiabendazol und mindestens einem Pyrithion verwendet.

In einer weiteren Ausführungsform des vorliegenden Kissens werden die zwei antimikrobiell wirksamen Substanzen in dem Polster in einem Gewichtsverhältnis zwischen 1 : 5 und 5 : 1, bevorzugt zwischen 1: 3 und 3 :1 , insbesondere bevorzugt zwischen 1 : 2 und 2 :1,m ganz besonders bevorzugt 1 : 1 verwendet.

Das in dem vorliegenden Kissen verwendete Polster besteht erfindungsgemäß aus Polyurethanschaum.

Das Polster kann eine oder mehrere Schaumschichten oder Schaumlagen umfassen. Im Falle eines mehrlagigen Polsters können die verschiedenen Schaumschichten über verschiedene Festigkeiten bzw. Steifigkeiten verfügen, die während der Schaumherstellung einstellbar sind. Polyurethanschäume werden typischerweise aus einem Isocyanat oder einem Gemisch von mindestens zwei Isocyanaten, wie zum Beispiel Toluol-2,4-Di isocyanat (TDI) oder Diphenylmethandiisocyanat (MDI), gegebenenfalls eingesetzt als Präpolymer, und einem Polyol oder einem Gemisch von mehreren Polyolen, beispielsweise einem Polyetherpolyol oder einem Polyesterpolyol, sowie Wasser als Basiskomponenten hergestellt. Das zumindest eine Isocyanat und dass zumindest eine Polyol werden vorzugsweise einem Anteil zugesetzt, so dass ein Verhältnis der funktionellen Gruppen -NCO/-OH in einem Bereich zwischen 0,20:1 , insbesondere 0,85:1 und 0,95:1, insbesondere 1,2:1 eingestellt wird.

Bevorzugterweise werden die antimikrobiell wirksamen Substanzen während der Schaumherstellung in den Schaum eingebaut. Hierzu wird die Mischung von dem Thiabendazol und dem mindestens einem Pyrithion in einer Dispersion vorgelegt. Die Dispersion aus Pyrithion und Thiabendazol kann zu der Polyol-Komponente vor der Polymerisation zugegeben werden. Dies ermöglicht eine sehr gute Verteilung der antimikrobiell wirksamen Substanzen in der Schaummatrix. Für diese Zwecke kann die verwendete Dispersion, die in Wasser unlöslich ist, einen Lösungsmittelträger, insbesondere einen phthalatfreien Weichmacher, enthalten. Der Anteil an flüchtigen organischen Bestandteilen beträgt in dieser Dispersion zwischen 3 und 5 %, bevorzugt 4%. Diese Dispersion wird in einer Menge zwischen 0,1 - 0,7 %, bevorzugt zwischen 0,3 - 0,4% in Bezug auf die Polyolmenge bei der Schaumherstellung zugegeben.

Es können weitere Zusatzstoffe, wie beispielsweise ein Katalysator bzw. Aktivator, Entschäumer, Farbmittel zugesetzt werden. Als Zusatzstoffe können Farbpigmente, wie Titanoxide, insbesondere Titandioxid, Bariumsulfat, Ionenaustauscher, Polyethylen, Polypropylen, Polyester, Aktivkohle, expandierbarer Graphit, Polymere Superabsorber zur Aufnahme von Feuchtigkeit und Flammschutzmittel verwendet werden.

Generell ist zu beachten, dass durch die Zugabe von antimikrobiellen Substanzen in den Polsterschaum ein neuartiger Schaum hergestellt wird, der den spezifischen Anforderungen an Schäumen in der Flugzeugindustrie genügen muss. Eine einfache Übertragung von Eigenschaften von einem Schaum auf einen anderen Schaum ist in der Flugzeugindustrie nicht möglich. Insbesondere muss den strengen Anforderungen an das Brandverhalten von Schäumen in der Flugzeugindustrie entsprochen werden.

Wie beschrieben, ist das mindestens eine Polster von mindestens einem Flammenschutzgewebe aus einem Vlies bzw. Gewebe bedeckt, wie z.B. aus der WO2018/177808 A1 bekannt.

Das vorliegend verwendete antimikrobiell wirksame und abriebfeste Flammschutzgewebe umfasst mindestens eine Barriereschicht aus mindestens einem Faservlies aus mindestens einer flammenfesten Faserart, und mindestens eine auf der Barriereschicht vorgesehene abriebfesten Schicht (Abrasionsschicht) aus mindestens einem Textilstoff mit hoher Abriebbeständigkeit aus mindestens einer Faserart, bevorzugt mindestens zwei Faserarten.

Die mindestens eine im vorliegenden Flammenschutzgewebe verwendete Abrasionsschicht weist eine Abriebbeständigkeit von mindestens 30.000 Zyklen, bevorzugt von mindesten 45.000 Zyklen, insbesondere von mindestens 55.000 Zyklen, ganz besonders bevorzugt von mindestens 150.000 Zyklen auf. Die Abriebbeständigkeit wird nach Martinedale DIN ISO 12947 1;BS 5960; 1988 bestimmt. In dem Testverfahren nach Martindale wird als Standardmaterial Baumwolle verwendet. Die erforderliche Höhe der Abriebfestigkeit des Flammenschutzgewebes ist von der anvisierten Verwendung beeinflusst. So hängt die Abriebfestigkeit von der Flugzeugstruktur ab z.B. Sitzbodenschale bzw. Gewebe (Diaframe) oder Rückenlehne Struktur, in oder an welcher das Flammenschutzgewebe eingesetzt wird. Vorliegend wird angestrebt, ein Flammenschutzgewebe bereitzustellen, welches für alle Flugzeugstrukturen einsetzbar ist.

Die hohe Abriebbeständigkeit des für die Abrasionsschicht verwendeten Textilstoffes wird insbesondere durch eine große Engmaschigkeit und geringen Faserabstand der im Textilstoff verwendeten Fasern bedingt. Entsprechend liegt die Zugfestigkeit des für die Abrasionsschicht verwendeten Textilstoffes in einem Bereich zwischen 700 und 1200 N/25mm, bevorzugt zwischen 800 und 1100 N/25mm, insbesondere bevorzugt zwischen 850 und 1000 N/25mm in der Längsrichtung und in einem Bereich zwischen 400 und 800 N /25mm, bevorzugt zwischen 500 und 700 N/25mm, insbesondere bevorzugt zwischen 500 und 600 N/25mm in der Querrichtung. Die Zugfestigkeit wird nach DIN 53357-A mit einem 25 mm breiten Band bestimmt.

Der als Abrasionsschicht verwendete Textilstoff kann ein Gewebe, ein Gewirke oder ein Gestricke sein. Dabei ist es bevorzugt, wenn der verwendete Textilstoff auf der Vorderseite und der Rückseite die gleiche Optik aufweist.

Vorliegend ist unter einem Gewebe ein textiles Flächengewebe aus mindestens zwei rechtwinklig oder nahezu rechtwinklig verkreuzten Fadensystemen zu verstehen, wobei die in Längsrichtung verlaufenden Fäden als Kettfäden bezeichnet werden und die in Querrichtung verlaufenden Fäden als Schussfäden bezeichnet werden. Die Fäden gehen in einem bestimmten Rhythmus (Bindung) über und unter den querliegenden Fäden durch. Im vorliegend als Abrasionsschicht vewendeten Gewebe liegen eine Faser in Kettrichtung und eine Faser in Schussrichtung aneinander. Hierdurch wird eine hohe Engmaschigkeit bewirkt,
Ein Gewirke und ein Gestricke hingegen sind Maschenwaren und werden aus Fadensystemen durch Maschenbildung hergestellt, wobei eine Fadenschlinge in eine andere Fadenschlinge geschlungen wird. Im Falle eines Gestrickes wird eine Masche neben der anderen hergestellt, d.h. der Faden verläuft horizontal; während im Falle eines Gewirkes der Faden übereinander stehende Maschen bildet, d.h. der Faden verläuft senkrecht. Auch hier wird durch einen geringen Faserabstand eine hohe Engmaschigkeit bewirkt.

In einer Ausführungsform kann die in der Abrasionsschicht verwendete Faserart synthetische oder natürliche Fasern umfassen.

Als synthetische Fasern können Polymerfasern ausgewählt aus der Gruppe der Polyacrylnitrilfasern (PAN-Faser), preoxidierte PAN-Fasern, Polyaramid-Fasern, wie para-Aramid-Fasern (Kevlar) oder meta-Aramid-Fasern (Nomex), Kynol-Novoloid oder Carbon-Fasern verwendet werden. Auch flammschutzausgerüstete Fasern können verwendet werden. Bevorzugte Fasern sind para-Aramid Fasern (oder alternativ meta-Aramid-Fasern) und Polyacrylnitrilfasern (PAN-Faser). Als natürliche Fasern können flammgeschützete Samenfasern wie z.B. Baumwollfasern oder flammgeschützte Bastfasern wie z.B. Hanffasern verwendet werden.

In einer weiteren Ausführungsform des vorliegenden Flammenschutzgewebes kann die Abrasionsschicht auch aus mehr als einer Faserart bestehen. Bevorzugt sind zwei, drei oder vier verschiedene Faserarten, wobei Faserart und Faseranteile beliebig kombiniert und variiert werden können. In einer bevorzugten Ausführungsform werden lediglich zwei Faserarten verwendet, wobei poly-Aramid Fasern und Polyacrylnitrilfasern (PAN-Faser) bevorzugt sind.

So können im Falle der Verwendung von zwei Faserarten in der Abrasionsschicht die quantitativen Anteile jeweils beliebig in einem Bereich zwischen 5 und 95 Gew%, bevorzugt zwischen 10 und 90 Gew%, besonders bevorzugt zwischen 20 und 80 Gew% variieren.

In einer Variante kann die Abrasionsschicht
50 bis 90 Gew%, bevorzugt 60 bis 80 Gew%, insbesondere bevorzugt 70 Gew% einer ersten Faserart, und
10 bis 50 Gew%, bevorzugt 20 bis 40 Gew%, insbesondere bevorzugt 30 Gew% einer zweiten Faserart
umfassen.

Erfindungsgemäß besteht die mindestens eine Abrasionsschicht
50 bis 90 Gew%, bevorzugt 60 bis 80 Gew%, insbesondere bevorzugt 70 Gew% Polyacrylnitril (PAN) Fasern, und
10 bis 50 Gew%, bevorzugt 20 bis 40 Gew%, insbesondere bevorzugt 30 Gew% Para-aramid Fasern.

In einer weiteren bevorzugten Ausführungsform des vorliegenden Flammenschutzgewebes weist die mindestens eine Abrasionsschicht ein Flächengewicht zwischen 100 und 180 g/m², bevorzugt zwischen 110 und 150 g/m², insbesondere bevorzugt zwischen 130 und 140 g/m² auf.

Generell ist es vorstellbar und möglich, mehr als eine Textillage als Abrasionsschicht zu verwenden, z.B. zwei, drei oder vier.

Die Dicke der Abrasionsschicht liegt in einem Bereich zwischen 0,2 und 1 mm, bevorzugt 0,4 bis 0,8 mm, insbesondere bei 0,5 mm.

Wie oben erwähnt, kann die Abrasionsschicht ein Fasergemisch aus Fasern auf Basis z.B. von Polyaramiden (insbesondere para-Aramid) und Polyacrylnitril umfassen bzw. aus diesen Fasern bestehen.

Polyaramide (aromatische Polyamide) sind Polyamide, bei denen die Amidgruppen an aromatischen Gruppen gebunden sind. Aramide zählen zu den Flüssigkristallpolymeren (FKP). Die wichtigsten Typen sind Poly(p-phenylenterephthalamid) (PPTA, Handelsnamen: Kevlar, Twaron) und Poly(m-phenylenisophthalamid) (PMPI, Handelsnamen: Nomex, Teijinconex)

Polyacrylnitrilfasern (PAN-Fasern) bestehen typischerweise aus 100% Poylacrylnitril. PAN-Fasern sind hart, steif, chemikalien- und lösungsmittelbeständig und weisen einen Schmelzpunkt oberhalb der Zersetzungstemperatur auf. Es können auch Copolymer-Fasern verwendet werden, die aus Polyacrylnitril (Anteil >85 %) und Polymethylmethacrylat bestehen.

Die mindestens eine Abrasionsschicht ist bevorzugt durchgängig flächig auf die mindestens eine Barriereschicht als Teil des Flammenschutzgewebes aufgetragen, und liegt demnach bevorzugt nicht in Form eines Gitternetzes oder Gittergewebes vor.

Wie oben angeführt, besteht die mindestens eine Barriereschicht aus mindestens einem Faservlies aus mindestens einer flammenfesten Faserart.

Faservliese (oder Vliesstoffe) sind Gebilde aus Fasern begrenzter Länge, Endlosfasern (Filamenten) oder geschnittenen Garnen jeglicher Art und jeglichen Ursprungs, die auf irgendeine Weise zu einem Vlies (einer Faserschicht, einem Faserflor) zusammengefügt und auf irgendeine Weise miteinander verbunden worden sind, wobei ein Verkreuzen bzw. Verschlingen von Garnen, wie es beim Weben, Wirken, Stricken (siehe oben) geschieht, ausgenommen sind. Vliesstoffe sind größtenteils flexible textile Flächengebilde, d. h. sie sind leicht biegsam, ihre Hauptstrukturelemente sind textile Fasern und sie weisen eine vergleichsweise geringe Dicke gegenüber ihrer Länge und Breite auf.

Im vorliegenden Fall sind die Fasern des als Barriereschicht verwendeten Faservlieses vernadelt und anschließend geglättet, bzw. kalandriert (bzw. zwischen zwei Walzen verpresst oder gebügelt).

In einer Ausführungsform kann die in der Barriereschicht verwendete Faserart synthetische oder natürliche Fasern umfassen. Bevorzugt umfasst die Barriereschicht synthetische Fasern in Form vom Polymerfasern ausgewählt aus der Gruppe der Polyacrylnitrilfasern (PAN-Faser), preoxidierte PAN-Fasern, Acrylnitril-Fasern (z.B. Pyrotex), Polyaramid-Fasern, Kynol-Novoloid, para-aramid (Kevlar), meta-aramid (Nomex), Basalt-Faser, Polykieselsäure (SIALOXOL-Verbindungen), Carbon-Faser verwendet werden.

In einer weiteren Ausführungsform des vorliegenden Flammenschutzgewebes kann die Barriereschicht auch aus mehr als einer Faserart bestehen. Bevorzugt sind zwei, drei oder vier verschiedene Faserarten, wobei Faserart und Faseranteile beliebig kombiniert und variiert werden können.

So können im Falle der Verwendung von zwei Faserarten in der Barriereschicht die quantitativen Anteile jeweils beliebig in einem Bereich zwischen 5 und 95 Gew%, bevorzugt zwischen 10 und 90 Gew%, besonders bevorzugt zwischen 20 und 80 Gew% variieren.

Im Falle der Verwendung von drei Faserarten können die quantitativen Anteile wie folgt aussehen:
50 bis 90 Gew%, bevorzugt 60 bis 80 Gew%, insbesondere bevorzugt 70 Gew% einer ersten Faserart,
5 bis 30 Gew%, bevorzugt 10 bis 20 Gew%, insbesondere bevorzugt 15 Gew% einer zweiten Faserart, und
5 bis 30 Gew%, bevorzugt 10 bis 20 Gew%, insbesondere bevorzugt 15 Gew% einer dritten Faserart.

Erfindungsgemäß besteht die mindestens eine Barriereschicht aus
50 bis 90 Gew%, bevorzugt 60 bis 80 Gew%, insbesondere bevorzugt 70 Gew% Acrylnitril-Fasern (wie Pyrotex Faser),
5 bis 30 Gew%, bevorzugt 10 bis 20 Gew%, insbesondere bevorzugt 15 Gew% Para-Aramid Fasern, und
5 bis 30 Gew%, bevorzugt 10 bis 20 Gew%, insbesondere bevorzugt 15 Gew% pre-oxidierte Polyacrylnitril (preox PAN) Fasern.

In einer weiteren bevorzugten Ausführungsform des vorliegenden Flammenschutzgewebes weist die mindestens eine Barriereschicht ein Flächengewicht zwischen 50 und 150 g/m², bevorzugt zwischen 60 und 120 g/m², insbesondere bevorzugt zwischen 70 und 100 g/m² auf.

Die Dicke der Barriereschicht liegt zwischen 0,7 und 1,3 mm, bevorzugt zwischen 0,9 und 1,2 mm, bevorzugt zwischen 1,0 und 1,2 mm.

Auch im Falle der Barriereschicht ist es generell vorstellbar und möglich, mehr als eine Vlieslage als Barriereschicht zu verwenden, z.B. zwei, drei oder vier.

Wie oben bereits erwähnt, kann die Barriereschicht aus einem Fasergemisch von Fasern auf der Basis von Acrylnitril-Fasern (wie Pyrotex), pre-oxidierten Polyacrylniril-Fasern und Para-Aramid Fasern bestehen.

Pyrotex-Fasern sind flammbeständige Fasern auf der Basis von Acrylnitril. Pyrotex-Fasern weisen sich durch eine hohe Säure/Basenbeständigkeit; UV Beständigkeit, Lösemittel-, Hydrolyse- und Oxidationsbeständigkeit und Dauertemperaturbeständig bis max. 250°C aus.

Pre-oxidierte Polyacrylnitril-Fasern (preox PAN Faser) sind oxidierte PAN Fasern mit einer sehr hohen Flammenbeständigkeit.

Das vorliegende Flammenschutzgewebe ist frei von Füllstoffen, wie anorganischen Füllstoffen, oder anderen Additiven. Zudem weist es keine Silikonbeschichtung oder ähnliches, wie oftmals in der Vergangenheit verwendet auf.

In einer weiteren bevorzugten Ausführungsform umfasst das vorliegende Flammenschutzgewebe mindestens eine Intumeszenz-Schicht auf. Im Kontext der vorliegenden Erfindung bezeichnet der Begriff der Intumeszenz eine Ausdehnung oder eine Anschwellung, also eine Volumenzunahme eines festen Körpers bzw. Materials. Intumeszente Materialien nehmen unter Hitzeeinwirkung an Volumen zu und entsprechend an Dichte ab. Im Falle des vorliegenden Flammenschutzgewebes besteht die mindestens eine IntumeszenzSchicht aus Blähgraphit, Kohle oder geeigneten Flammschutzfasern.

Besonders bevorzugt ist die Verwendung von Blähgraphit als Intumeszenz-Schicht. Blähgraphit, auch expandierbarer Graphit genannt, wird aus dem natürlich vorkommenden Mineral Graphit hergestellt. Eine Graphitflocke besteht aus Schichten von wabenförmig angeordneten Kohlenstoffatomen. Innerhalb der Schichten sind die Atome durch kovalente Bindungen sehr fest verbunden. Zwischen den Schichten herrschen nur schwache Bindungskräfte, so dass Moleküle zwischen die Graphitschichten eingelagert (interkaliert) werden können. Durch die Einlagerung von Säuren, üblicherweise Schwefelsäure, wird Graphit in Blähgraphit umgewandelt. Wird Blähgraphit erhitzt, expandieren die Graphitflocken je nach Qualität, ab einer Temperatur von ca. 140°C, vorliegend bei ca. 180°C auf ein Vielfaches des ursprünglichen Volumens an. Durch das Verdampfen der eingelagerten Verbindungen werden die Graphitschichten ziehharmonikaartig auseinandergetrieben. Die expandierten Flocken haben eine "würmchenartige" Erscheinungsform und sind üblicherweise mehrere Millimeter lang. Eine der Hauptanwendungen von Blähgraphit stellt der Flammenschutz dar. Bei Hitzeeinwirkung expandiert der Blähgraphit und bildet eine Intumeszenzschicht auf der Materialoberfläche. Dies verlangsamt die Brandausweitung und wirkt den für den Menschen gefährlichsten Brandfolgen, nämlich der Bildung toxischer Gase und Rauch, entgegen.

Die mindestens eine Intumeszenz-Schicht ist bevorzugt auf zwischen der Abrasionsschicht und der Barriereschicht als Zwischenlage vorgesehen.

Im Falle der Verwendung von Blähgraphit als Intumeszenz-Schicht wird das Blähgraphit zunächst in ein geeignetes Bindemittel eingebracht. Anschließend wird die Abrasionsschicht mit dieser Lösung oder Suspension beschichtet.

Die mindestens eine Blähgraphitschicht weist ein Flächengewicht zwischen 30 und 110 g/m², bevorzugt zwischen 40 und 100 g/m², bevorzugt zwischen 50 und 80 g/m² auf.

Die Dicke der Blähgraphitschicht liegt zwischen 0,1 und 0,3 mm, bevorzugt zwischen 0,1 und 0,2 mm.

In einer besonders bevorzugten Ausführungsform besteht das vorliegende Flammenschutzgewebe aus mindestens einer Abrasionschicht in Form eines Gewirkes bzw. Gewebe mit mehr als 30.000 Zyklen Abriebbeständigkeit, mindestens einer Intumeszenzschicht in Form von Blähgraphit, Kohle oder verschiedenen Flammschutzfasern, und mindestens einer Barriereschicht in Form eines Nadelfließ aus flammbeständigen Materialien.

Der Schichtaufbau des vorliegenden Flammenschutzgewebes ist in einer bevorzugten Variante (von oben nach unten gesehen): Abrasionsschicht - Intumeszenzschicht-Barriereschicht.

Die Gesamtdicke des vorliegend verwendeten Flammenschutzgewebes liegt in einem Bereich zwischen 1,5 und 2,5 mm, bevorzugt zwischen 1,8 und 2,0 mm bei einem Gesamtgewicht zwischen 200 und 300 g, bevorzugt zwischen 220 und 280 g, insbesondere bevorzugt zwischen 250 und 270 g.

In einer weiteren Variante ist vorgesehen, dass der Schichtaufbau aus Abrasionsschicht, optional Intumeszenschicht und Barriereschicht laminiert, kaschiert, verklebt oder vernadelt wird.

Wie oben angeführt, weist das Flammenschutzgewebe antimikrobielle Eigenschaften auf. So sind erfindungsgemäß die Schichten des Flammenschutzgewebes, insbesondere Abrasionsschicht und Barriereschicht, mit mindestens einem (silberfreien) antimikrobiellen Mittel, wie z.B. Pyrithion, ausgestattet. Für diesen Zweck kann z.B. eine wässrige Pyrithiondispersion mit einem pH-Wert zwischen 6.5 - 8.5 in die textilen Gewebe eingebracht werden. Es ist auch möglich mindestens zwei antimikrobiell wirksame Substanzen, wie ein Pyrithion und Thiabendazol, in eine oder alle Schichten des Flammenschutzgewebes einzubringen.

Hierzu kann eine wässrige Dispersion umfassend mindestens Thiabendazol und/oder mindestens ein Pyrithion vorgelegt werden. Die wässrige Dispersion enthält Wasser als Lösungsmittelträger. Der Anteil an flüchtigen organischen Bestandteilen beträgt in der Dispersion zwischen 8 und 12 %, bevorzugt 10%. Diese Dispersion wird in einer Menge zwischen 0,1 - 0,7%, bevorzugt 0,4 - 0,5 % in Bezug auf das Gewicht des Gewebes bzw. Textilien (z.B. wie weiter unten beschrieben im Falle von Überzügen) aufgebracht.

Auch ist erfindungsgemäß auf der Oberseite des Flammschutzgewebes mindestens ein Überzug vorgesehen. Der mindestens eine Überzug kann mit dem mindestens einen Flammenschutzgewebe laminiert, kaschiert, verklebt oder vernäht sein. Dieser Überzug kann aus Leder, Kunstleder oder einem (haptisch angenehmen) Dekorstoff hergestellt sein.

Es ist ebenfalls vorgesehen, die für ein Kissen verwendeten Überzüge mit antimikrobiell wirksamen, Silber-freien Substanzen auszurüsten. Die Hauptmaterialien des Überzuges sind Leder, Kunstleder, textile Überzugsstoffe, Schäume oder Abstandsgewirke. Diese sind erfindungsgemäß mit einer wässrigen Dispersion aus Pyrithion und Thiabendazol mit einem pH-Wert zwischen 6.9 - 7.9 versehen oder beschichtet.

Flammenschutzgewebe und Überzug sind an dem mindestens einen Kunststoffpolster mittels geeigneter Befestigungsmittel befestigt. In einer anderen Variante wird das mindestens eine Flammenschutzgewebe auf dem Kunststoffpolster verklebt und der mindestens eine Überzug wird mittels Haft- oder Flauschbänder am Flammschutzgewebe befestigt.

Es ergeben sich somit verschiedene Ausführungsvarianten für das vorliegende Kissen mit dem folgenden Schichtaufbau (von unten nach oben): Polster - Flammenschutzgewebe; Polster - Flammenschutzgewebe - Überzug.

In einer weiteren bevorzugten Ausführungsform umfasst das vorliegende Kissen, insbesondere im Falle eines Sitzkissens, mindestens ein in das mindestens eine Polster eingebettetes Stabilisierungsmittel.

Das vorliegend in das Polster des Kissens eigebettete bzw. eingelagerte Stabilisierungsmittel ist im Vergleich zu dem Kunststoffmaterial des Polsters formstabiler und weist ein hohes Elastizitätsmodul auf. Entsprechend verleiht das Stabilisierungsmittel dem Kissen eine erhöhte mechanische Stabilität und Festigkeit. Ein weiterer Vorteil des eingelagerten Stabilisierungsmittels ist deren Austauschbarkeit, d.h. z.B. im Falle einer Beschädigung des Stabilisierungsmittels bestehen die Möglichkeit der Entnahme des beschädigten Stabilisierungsmittels und dessen Ersatz durch ein neues Teil.

In einer Ausführungsform umfasst das mindestens eine Stabilisierungsmittel voneinander beabstandete profilierte Trägerschienen bzw. Trägerplatten.

Die Anzahl der verwendeten Trägerschienen wird von der Breite des Kissens bestimmt. So können in einer Variante mindestens 2, bevorzugt 3 Trägerschienen im Kissen angeordnet sein. Die Trägerschienen haben einen bevorzugten Mitte-Mitte-Abstand von 100 bis 150 mm, insbesondere von 120 mm. Der Kante-zu-Kante-Abstand beträgt bevorzugt 50 bis 80 mm, bevorzugt 60 bis 65 mm. Bei einer Kissenbreite von 450 mm beträgt der Mindestabstand (Mitte-Mitte) 100 mm.

Die Trägerschienen können gewölbt sein, wobei ein U-Profil oder ein Trapez-Profil besonders bevorzugt ist. Die Wanddicke der Schienen beträgt zwischen 0,5 mm und 5 mm, bevorzugt zwischen 1 und 4 mm, insbesondere bevorzugt zwischen 2 mm und 3 mm. Die Tiefe des U-Profils bzw. Trapez-Profil liegt in einen Bereich zwischen 5 und 15 mm, bevorzugt zwischen 10 und 12 mm.

In einer besonders bevorzugten Ausführungsform ist zumindest ein Seitenende des Trägerschienenprofils wird mit einer Rundung, sprich mit einer Profil-Nase, versehen, um Schädigung des Schaumes durch scharfe Kanten zu verhindern. Die Profilrundung ist bevorzugt auf der Kissenvorderseite (d.h. im Kniekehlenbereich) vorgesehen, kann aber auch beidseitig möglich sein.

Die Trägerschienen können aus einem Leichtmetall, wie zum Beispiel Aluminium, oder auch aus einem geeigneten Kunststoffmaterial bestehen. Als besonders vorteilhaft haben sich auch hier Fasermaterialien, wie Kohlenstofffasern oder Glasfasern, erwiesen. Die Fasern sind in ein Harzsystem eingelagert, wie z.B. in ein Phenolharz oder Epoxidharz. Die Profilierung der Trägerschienen kann z.B. durch Pressprägung von Fasernasslaminaten oder dem Sheet Molding Compound (SMC) Verfahren erfolgen.

In einer besonders bevorzugten Ausführungsform sind die Trägerschienen mit einem Flammschutzmaterial, insbesondere in Form eines flammfesten Gewebes, versehen, das mit den Trägerschienen in geeigneter Weise verbunden ist.

Ein geeignetes Gewebe umfasst z.B. hochtemperaturfeste Fasern aus Glas, Kunststoff oder Graphit. Besonders bevorzugte temperaturstabile Fasern sind Kunststofffasern auf der Basis von Polypropylen, Polyacrylat oder Polyamiden wie Aramiden oder Polybenzimidazol. Letzteres ist besonders vorteilhaft, wenn die Trägerschiene selbst bereits aus flammfesten Material besteht, andernfalls kann auch flammfestes Gewebe eingesetzt werden.)

In einer bevorzugten Variante besteht das flammfeste Gewebe aus mehreren Lagen aus feuerfesten Material und verpressten Textilien. So können z.B. eine erste Lage aus hochtemperaturstabilen Fasern, eine zweite (Mittel)lage aus einem Prepreg-Gewebe und eine dritte Lage wiederum aus hochtemperaturstabilen Fasern bestehen.

Des Weiteren wird auf die obigen Ausführungen zum Aufbau des Kissens und deren Verwendung hingewiesen, die auch hier zutreffen.

Es ist weiterhin bevorzugt, wenn die vorliegenden Kissen, insbesondere Sitzkissen, mit mindestens einem Trägerelement als Teil eines Traggestells eines Flugzeugsitzes gekoppelt sind. Insbesondere ist vorgesehen, dass die Sitzkissen an dem mindestens einem Trägerelement mittels eines Befestigungsmittels, insbesondere in Form von Haftbändern oder Flauschbändern, befestigt ist. Es ist auch denkbar, dass die Befestigungsmittel bereits in das Stabilisierungsmittel (mittels SMC bzw. Pressprägung) eingearbeitet werden.

In einer Ausführungsform umfasst das Trägerelement des Traggestells des Flugzeugsitzes mindestens zwei parallel zueinander angeordnete Streben oder Holme. Die Holme des Trägerelementes verlaufen im eingebauten Zustand des Sitzkissens und des Flugzeugsitzes quer zur Flugzeuglängsrichtung; d.h. die Holme des Trägerelementes verlaufen parallel zur Erstreckungsrichtung y und daher parallel zur Breite b des Sitzkissens.

Die Erfindung wird nachfolgend unter Bezugnahme auf die Figuren der Zeichnungen näher erläutert. Es zeigen:
- Figur 1: eine schematische Ansicht eines erfindungsgemäßen Sitzkissens gemäß einer ersten Ausführungsform;
- Figur 2A: eine schematische Ansicht eines erfindungsgemäßen Sitzkissens gemäß einer zweiten Ausführungsform; und
- Figur 2B: eine schematische Querschnittsansicht einer in einem Sitzkissen der Fig. 2A integrierten Trägerschiene.

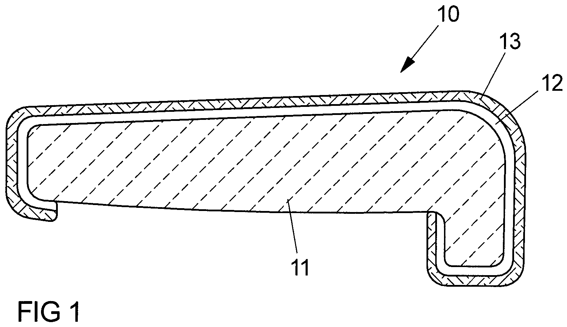

Figur 1 zeigt eine erste Ausführungsform eines antimikrobiell wirksamen Sitzkissens 10 für einen Flugzeugsitz. Das Polster 11 des Sitzkissens 10 besteht aus einem PU-Schaum mit 15 Gew% Thiabendazol und 15 Gew% Zn-Pyrithion (jeweils bezogen auf das Gesamtgewicht an PU-Schaum).

Das Polster 11 ist von einem Flammschutzgewebe 12 vollständig umgeben. Ein Schutzüberzug bzw. Abdeckung 13 ist mit dem Polster 11 inkl. Flammschutzgewebe mittels Haft oder Flauschbänder befestigt. Der Überzug 13 erstreckt sich über die gesamte Oberseite des Polsters inklusive des Kniekehlenbereiches.

Das antimikrobielle Flammenschutzgewebe 12 besteht aus einer Barriereschicht und einer Abrasionsschicht. Die Abrasionsschicht ist auf einer Seite (hier auf der Oberseite) der Barriereschicht flächig vorgesehen.

Die Barriereschicht besteht aus einem Faservlies aus 70% Pyrotex(bi-grade) Fasern (Acrylnitrilfasern), 15% para-Aramid Fasern(regeneriert) und 15% preox PAN (Polyacrylonitrile) Fasern. Das Flächengewicht der Barriereschicht beträgt in diesem Fall 70g/m². Die Abrasionsschicht besteht aus einem Gewebe aus 70% PAN (Polyacrylonitril) Fasern und 30% para-Aramid Fasern. Das Flächengewicht der Abrasionsschicht liegt bei 130 g/m².

Zusätzlich zu Barriereschicht und Abrasionsschicht kann im Flammenschutzgewebe 12 eine dritte Intumeszenzschicht aus Blähgraphit vorgesehen sein, wobei der Blähgraphit bei 180°C beginnt aufzublähen. Die Blähgraphitschicht ist als Zwischenlage zwischen der Abrasionsschicht und der Barriereschicht vorgesehen. Die Blähgraphitschicht ist mit einem Flächengewicht von 50 g/m² auf die Abrasionsschicht aufgetragen.

An dem Aufbau aus Flammenschutzgewebe 12 und antimikrobiell wirksamen Polster wird dann ein Schutzüberzug 13 (z.B. Lederüberzug oder Stoffüberzug) mittels Haft- oder Flauschbänder befestigt.

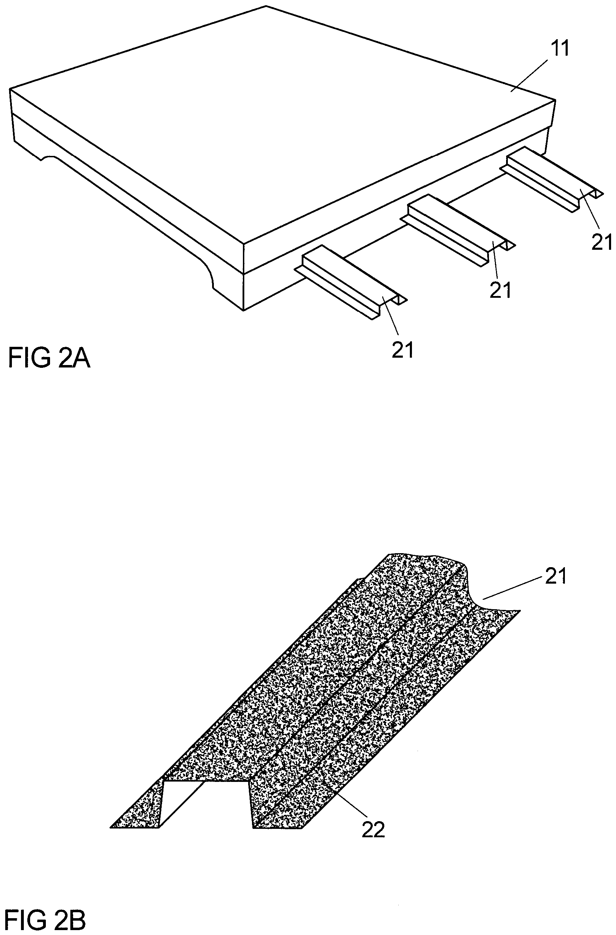

In der in den Figur 2A gezeigten Ausführungsformen des erfindungsgemäßen Sitzkissens 20 ist ein Stabilisierungsmittel in Form von U-förmigen Trägerschienen 21 vorgesehen.

Die Trägerschienen 21 weisen ein U-Profil auf. Die Wanddicke der Trägerschienen beträgt zwischen 1,5 und 2 mm. Die Trägerschienen bestehen aus Kohlenstofffasern oder Glasfasern. Die Fasern sind in ein Harzsystem eingelagert, wie z.B. in ein Phenolharz oder Epoxidharz. Die Profilierung der Trägerschienen kann z.B. durch Pressprägung von Fasernasslaminaten oder mittels dem Sheet Moldig Compound (SMC) Verfahren erfolgen.

In der in Figur 2A gezeigten Ausführungsform sind drei Trägerschienen parallel mit einem Mitte-Mitte-Abstand von 100 mm in einem Sitzkissen (mit einer Breite von 450 mm) gezeigt. Die Trägerschienen weisen ein U-Profil oder ein Trapez-Profil auf. Die Tiefe des U-Profils bzw. Trapez-Profils liegt in einen Bereich zwischen 10 und 12 mm.

Die Trägerschienen 21 sind entweder aus einem flammfesten Material hergestellt oder sind zusätzlich mit einem Flammschutzmaterial in Form eines flammfesten Gewebes 22 aus temperaturstabilen Fasern, insbesondere Kunststofffasern auf der Basis von Polypropylen, Polyacrylat oder Polyamiden wie Aramiden oder Polybenzimidazol versehen. Hierzu können die Trägerschienen 21 mit dem flammfesten Gewebe 22 laminiert werden (siehe Figur 2B).

### Ausführungsbeispiel 1: Wirksamkeit gegen Staphylococcus aureus ATTC 6538p

Die antimikrobielle Wirksamkeit des erfindungsgemäßen Kissens (15 Gew% Thiabendazol/ 15 Gew% Zn-Pyrithion) wurde gemäß ISO20743:2013 (E) getestet.

Hierzu wurde je eine Probe eines Materials (0,4 ± 0,05 g) in einem Behälter mit einer Petrischale I platziert. Es wurden tropfenweise 0,2 ml eines *Staphylococcus aureus* (ATCC 6538) Inokulum (Nutrient broth)auf der Probenoberfläche platziert.. Die Proben wurden für 24 Stunden bei 35°C inkubiert. Nach 0o, 3, 6, 12 und 24 Stunden wurden je 3 Proben in 10 ml einer neutralisierende Flüssigkeit (EN+ neutraliser) übertragen und geschüttelt. Die Anzahl der Bakterien in den resultierenden Suspensionen wurden unter Verwendung von Verdünnungsreihen auf Platten (TSA Agar) im Vergleich zu einer unbehandelten Kontrollprobe quantifiziert. Hierzu wurden die Platten für 5 Tage bei 35°C inkubiert und die Anzahl der Kolonien wurden nach 2 Tagen und 5 Tagen gezählt.

Im Ergebnis zeigte sich eine Reduzierung des Wachstums von *Staphylococcus aureus* in der behandelten Probe nach 24 h von über 99.9 % im Vergleich zu der unbehandelten Kontrollprobe.

### Ausführungsbeispiel 2: Wirksamkeit gegen Methicillin resistenten Staphylococcus aureus NCTC 13142

Die Probenvorbereitung und Versuchsdurchführung sind analog zu denen in Ausführungsbeispiel 1. Im Ergebnis zeigte sich eine Reduzierung des Wachstums von Methicillin resistenten *Staphylococcus aureus* in der behandelten Probe nach 24 h von über 99.9 % im Vergleich zu der unbehandelten Kontrollprobe.

### Ausführungsbeispiel 3: Wirksamkeit gegen E. coli DSM 1576

Die Probenvorbereitung und Versuchsdurchführung sind analog zu denen in Ausführungsbeispiel 1. Im Ergebnis zeigte sich eine Reduzierung des Wachstums von *E. coli* in der behandelten Probe nach 24 h von über 99.9 % im Vergleich zu der unbehandelten Kontrollprobe.

## Patentansprüche

1. Kissen (10) für einen Flugzeugsitz umfassend
- mindestens ein antimikrobiell wirksames Polster (11) aus mindestens einem Polyurethanschaum, wobei in den Polyuethanschaum mindestens Thiabendazol und mindestens ein Pyrithion als antimikrobiell wirksame Substanzen enthalten sind, und wobei kein Silber oder Silber-Ionen als antimikrobiell wirksame Substanzen enthalten sind,
- mindestens ein das mindestens eine Polster bedeckendes antimikrobiell wirksames Flammenschutzgewebe (12),
wobei das Flammenschutzgewebe mindestens eine Abrasionsschicht und mindestens eine Barriereschicht umfasst,
wobei die mindestens eine Abrasionsschicht aus 50 bis 90 Gew%, Polyacrylnitril (PAN) Fasern und 10 bis 50 Gew%, Para-aramid Fasern besteht,
wobei die mindestens eine Barriereschicht 50 bis 90 Gew% Acrylnitril-Fasern, 5 bis 30 Gew% Para-Aramid Fasern, und 5 bis 30 Gew% pre-oxidierte Polyacrylnitril (preox PAN) Fasern besteht,
wobei jeweils in die mindestens eine Abrasionsschicht und die mindesten: eine Barriereschicht mindestens Thiabendazol und mindestens ein Pyrithior eingebracht sind; und
- mindestens einen antimikrobiell wirksamen Überzug (13), wobei das Material des Überzuges mit einer wässrigen Dispersion aus Pyrithion und Thiabendazol mit einem pH-Wert zwischen 6.9 - 7.9 versehen oder beschichtet ist.

2. Kissen nach Anspruch 1, **dadurch gekennzeichnet, dass** das Thiabendazol in einer Menge zwischen 5 und 25 Gew%, bevorzugt zwischen 10 und 20 Gew%, insbesondere bevorzugt zwischen 12 und 18 Gew%, ganz besonders bevorzugt 15 Gew% in dem Polster enthalten ist.

3. Kissen nach Anspruch 1oder 2, **dadurch gekennzeichnet, dass** das mindestens eine Pyrithion in einer Menge zwischen 5 und 25 Gew%, bevorzugt zwischen 10 und 20 Gew%, insbesondere bevorzugt zwischen 12 und 18 Gew%, ganz besonders bevorzugt 15 Gew% in dem Polster enthalten ist.

4. Kissen nach einem der vorhergehenden Ansprüche, **dadurch gekennzeichnet, dass** die mindestens zwei antimikrobiell wirksame Substanzen in dem Polster in einem Gewichtsverhältnis zwischen 1 : 5 und 5 : 1, bevorzugt zwischen 1: 3 und 3 :1 , insbesondere bevorzugt zwischen 1 : 2 und 2 :1,m ganz besonders bevorzugt 1 : 1 verwendet werden.

5. Kissen nach einem der vorhergehenden Ansprüche, **dadurch gekennzeichnet, dass** die mindestens eine Barriereschicht aus 60 bis 80 Gew%, bevorzugt 70 Gew% AcrylnitrilFasern (wie Pyrotex Faser), 10 bis 20 Gew%, bevorzugt 15 Gew% Para-amid Fasern, und 10 bis 20 Gew%, bevorzugt 15 Gew% pre-oxidierte Polyacrylnitril (preox PAN) Fasern besteht.

6. Kissen nach einem der vorhergehenden Ansprüche, **dadurch gekennzeichnet, dass** die mindestens eine Barriereschicht ein Flächengewicht zwischen 50 und 150 g/m², bevorzugt zwischen 60 und 120 g/m², insbesondere bevorzugt zwischen 70 und 100 g/m² aufweist.

7. Kissen nach einem der vorhergehenden Ansprüche, **dadurch gekennzeichnet, dass** die mindestens eine Abrasionsschicht aus 60 bis 80 Gew%, bevorzugt 70 Gew% Polyacrylnitril (PAN) Fasern, und 20 bis 40 Gew%, bevorzugt 30 Gew% Para-aramid Fasern besteht.

8. Kissen nach einem der vorhergehenden Ansprüche, **dadurch gekennzeichnet, dass** die mindestens eine Abrasionsschicht ein Flächengewicht zwischen 100 und 180 g/m², bevorzugt zwischen 110 und 150 g/m², insbesondere bevorzugt zwischen 130 und 140 g/m² auf

9. Kissen nach einem der vorhergehenden Ansprüche, **dadurch gekennzeichnet, dass** das mindestens Thiabendazol und mindestens ein Pyrithion in Form einer wässrigen Dispersion vorgelegt wird, wobei die wässrige Dispersion in einer Menge zwischen 0,1-0,7 %, bevorzugt 0,4 - 0,5 % in Bezug auf das Gewicht des Gewebes jeweils in die in die mindestens einen Abrasionsschicht und die mindestens einen Barriereschicht aufgebracht wird.

10. Kissen nach einem der vorhergehenden Ansprüche, **dadurch gekennzeichnet, dass** das mindestens eine Flammenschutzgewebe (12) mindesten eine IntumeszenzSchicht, insbesondere aus Blähgraphit, aufweist.

11. Kissen nach einem der vorhergehenden Ansprüche **gekennzeichnet durch** mindestens ein in das mindestens einen Polster eingebettetes Stabilisierungsmittel.

12. Kissen nach Anspruch 11, **dadurch gekennzeichnet, dass** das mindestens eine Stabilisierungsmittel voneinander beabstandete profilierte Trägerschienen (21) umfasst.

13. Flugzeugsitz, umfassend mindestens ein Kissen nach einem der vorhergehenden Ansprüche.

## Claims

1. A cushion (10) for an aircraft seat comprising
- at least one antimicrobially active pad (11) made of at least one polyurethane foam, wherein at least thiabendazole and at least one pyrithione are contained in the polyurethane foam as antimicrobially active substances, and wherein no silver or silver ions are contained as antimicrobially active substances,
- at least one antimicrobially effective flame protection fabric (12) covering the at least one pad,
wherein the flame protection fabric comprises at least one abrasion layer and at least one barrier layer,
wherein the at least one abrasion layer consists of 50 to 90 wt-% of polyacrylonitrile (PAN) fibers and 10 to 50 wt-% of para-aramide fibers,
wherein the at least one barrier layer consists of 50 to 90 wt-% of acrylonitrile fibers, 5 to 30 wt-% of para-aramide fibers, and 5 to 30 wt-% of pre-oxidized polyacrylonitrile (preox PAN) fibers,
wherein at least thiabendazole and at least one pyrithione are incorporated into each of the at least one abrasion layer and the at least one barrier layer; and
- at least one antimicrobially active coating (13), wherein the material of the coating is provided or coated with an aqueous dispersion of pyrithione and thiabendazole with a pH value between 6.9 - 7.9.

2. The cushion according to claim 1, **characterized in that** the thiabendazole is contained in the pad in an amount of between 5 and 25 wt-%, preferably between 10 and 20 wt-%, in particular preferably between 12 and 18 wt-%, quite particularly preferably 15 wt-%.

3. The cushion according to claim 1 or 2, **characterized in that** the at least one pyrithione is contained in the pad in an amount of between 5 and 25 wt-%, preferably between 10 and 20 wt-%, in particular preferably between 12 and 18 wt-%, quite particularly preferably 15 wt-%.

4. The cushion according to any of the preceding claims, **characterized in that** the at least two antimicrobially active substances in the pad are used in a weight ratio of between 1 : 5 and 5 : 1, preferably between 1 : 3 and 3 : 1, in particular preferably between 1 : 2 and 2 : 1, quite particularly preferably 1 : 1.

5. The cushion according to any of the preceding claims, **characterized in that** the at least one barrier layer consists of 60 to 80 wt-%, preferably 70 wt-% of acrylonitrile fibers (such as Pyrotex fiber), 10 to 20 wt-%, preferably 15 wt-% of para-amide fibers, and 10 to 20 wt-%, preferably 15 wt-% of pre-oxidized polyacrylonitrile (preox PAN) fibers.

6. The cushion according to any of the preceding claims, **characterized in that** the at least one barrier layer has a basis weight of between 50 and 150 g/m², preferably between 60 and 120 g/m², in particular preferably between 70 and 100 g/m².

7. The cushion according to any of the preceding claims, **characterized in that** the at least one abrasion layer consists of 60 to 80 wt-%, preferably 70 wt-% of polyacrylonitrile (PAN) fibers and 20 to 40 wt-%, preferably 30 wt-% of para-aramide fibers.

8. The cushion according to any of the preceding claims, **characterized in that** the at least one abrasion layer has a basis weight of between 100 and 180 g/m², preferably between 110 and 150 g/m², in particular preferably between 130 and 140 g/m².

9. The cushion according to any of the preceding claims, **characterized in that** at least the thiabendazol and at least one pyrithione are provided in the form of an aqueous dispersion, wherein the aqueous dispersion is applied in an amount of between 0.1-0.7%, preferably 0.4-0.5% with respect to the weight of the fabric, in each case into the at least one abrasion layer and the at least one barrier layer.

10. The cushion according to any of the preceding claims, **characterized in that** the at least one flame protection fabric (12) has at least one intumescent layer, in particular of expandable graphite.

11. The cushion according to any of the preceding claims, **characterized by** at least one stabilizing means embedded in the at least one pad.

12. The cushion according to claim 11, **characterized in that** the at least one stabilizing means comprises profiled support rails (21) spaced apart from each other.

13. An aircraft seat comprising at least one cushion according to any of the preceding claims.

## Revendications

1. Coussin (10) pour un siège d'avion comprenant
- au moins un rembourrage à effet antimicrobien (11) constitué d'au moins une mousse de polyuréthane, dans lequel au moins du thiabendazole et au moins une pyrithione sont contenus dans la mousse de polyuréthane en tant que substances à effet antimicrobien, et dans lequel aucun argent ou ion argent n'est contenu en tant que substances à effet antimicrobien,
- au moins un tissu ignifuge (12) à effet antimicrobien recouvrant ledit au moins un rembourrage,
dans lequel le tissu ignifuge comprend au moins une couche d'abrasion et au moins une couche barrière,
dans lequel ladite au moins une couche d'abrasion est constituée de 50 à 90 % en poids de fibres de polyacrylonitrile (PAN) et de 10 à 50 % en poids de fibres de para-aramide,
dans lequel ladite au moins une couche barrière est constituée de 50 à 90 % en poids de fibres d'acrylonitrile, de 5 à 30 % en poids de fibres de para-aramide, et de 5 à 30 % en poids de fibres de polyacrylonitrile pré-oxydé (préox PAN),
au moins du thiabendazole et au moins une pyrithione étant incorporés dans chacune de ladite au moins une couche d'abrasion et de ladite au moins une couche barrière ; et
- au moins un revêtement à effet antimicrobien (13), le matériau du revêtement étant pourvu ou revêtu d'une dispersion aqueuse de pyrithione et de thiabendazole ayant un pH compris entre 6,9 et 7,9.

2. Coussin selon la revendication 1, **caractérisé en ce que** le thiabendazole est contenu dans le rembourrage en une quantité comprise entre 5 et 25 % en poids, de préférence entre 10 et 20 % en poids, de manière particulièrement préférée entre 12 et 18 % en poids, de manière tout particulièrement préférée 15 % en poids.

3. Coussin selon la revendication 1 ou 2, **caractérisé en ce que** l'au moins une pyrithione est contenue dans le rembourrage en une quantité comprise entre 5 et 25 % en poids, de préférence entre 10 et 20 % en poids, de manière particulièrement préférée entre 12 et 18 % en poids, de manière tout particulièrement préférée 15 % en poids.

4. Coussin selon l'une quelconque des revendications précédentes, **caractérisé en ce que** les au moins deux substances à effet antimicrobien sont utilisées dans le rembourrage dans un rapport pondéral compris entre 1 : 5 et 5 : 1, de préférence entre 1 : 3 et 3 : 1, de manière particulièrement préférée entre 1 : 2 et 2 : 1, de manière tout particulièrement préférée 1 : 1.

5. Coussin selon l'une quelconque des revendications précédentes, **caractérisé en ce que** ladite au moins une couche barrière est constituée de 60 à 80 % en poids, de préférence 70 % en poids de fibres d'acrylonitrile (fibres Pyrotex), 10 à 20 % en poids, de préférence 15 % en poids de fibres de para-aramide, et 10 à 20 % en poids, de préférence 15 % en poids de fibres de polyacrylonitrile préoxydées (préox PAN).

6. Coussin selon l'une quelconque des revendications précédentes, **caractérisé en ce que** ladite au moins une couche barrière présente un poids par unité de surface compris entre 50 et 150 g/m², de préférence entre 60 et 120 g/m², en particulier de préférence entre 70 et 100 g/m².

7. Coussin selon l'une quelconque des revendications précédentes, **caractérisé en ce que** ladite au moins une couche d'abrasion est constituée de 60 à 80 % en poids, de préférence 70 % en poids de fibres de polyacrylonitrile (PAN) et 20 à 40 % en poids, de préférence 30 % en poids de fibres de para-aramide.

8. Coussin selon l'une quelconque des revendications précédentes, **caractérisé en ce que** ladite au moins une couche d'abrasion présente un poids par unité de surface compris entre 100 et 180 g/m², de préférence entre 110 et 150 g/m², en particulier de préférence entre 130 et 140 g/m².

9. Coussin selon l'une quelconque des revendications précédentes, **caractérisé en ce qu'**au moins du thiabendazol et au moins une pyrithione sont présentés sous la forme d'une dispersion aqueuse, ladite dispersion aqueuse étant appliquée en une quantité comprise entre 0,1 et 0,7 %, de préférence entre 0,4 et 0,5 % par rapport au poids du tissu, respectivement dans ladite au moins une couche d'abrasion et ladite au moins une couche barrière.

10. Coussin selon l'une quelconque des revendications précédentes, **caractérisé en ce que** ledit au moins un tissu ignifuge (12) présente au moins une couche intumescente, en particulier en graphite expansé.

11. Coussin selon l'une quelconque des revendications précédentes, **caractérisé par** au moins un moyen de stabilisation incorporé dans ledit au moins un rembourrage.

12. Coussin selon la revendication 11, **caractérisé en ce que** ledit au moins un moyen de stabilisation comprend des rails de support profilés (21) espacés les uns des autres.

13. Siège d'avion, comprenant au moins un coussin selon l'une quelconque des revendications précédentes.
